(19) Europäisches Patentamt
European Patent Office
Office européen des brevets

(11) **EP 2 393 054 A1**

(12) **EUROPEAN PATENT APPLICATION**

(43) Date of publication:
**07.12.2011 Bulletin 2011/49**

(51) Int Cl.:
*G06Q 10/00* (2006.01)     *G05B 19/418* (2006.01)
*G08B 25/00* (2006.01)

(21) Application number: **11168351.2**

(22) Date of filing: **01.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.06.2010 EP 10461518**

(71) Applicant: **Promark Sp. z o.o.
02-927 Warszawa (PL)**

(72) Inventors:
• **Jeuté, Piotr
  02-927 Warszawa (PL)**
• **Charlak, Sebastian
  99-300 Kutno (PL)**

(74) Representative: **Pawlowski, Adam
  Eupatent.PL
  Al. Kosciuszki 23/25
  90-418 Lodz (PL)**

(54) **System and method for preventive maintenance of marking devices**

(57)     A system for preventive maintenance of a plurality of marking devices (110, 210) installed in a production line and configured to apply identification code to products manufactured on the production line, the system comprising monitoring means configured to monitor working parameters of the plurality of marking devices (110, 210), the working parameters representing physical quantities related to operation of device components, alerting means configured to generate alerting information about devices for which the monitored working parameters are detected outside a predetermined allowable range specifying allowable minimum and/or allowable maximum value for the particular parameter.

Fig. 2

**Description**

The present invention relates to preventive maintenance of marking devices.

Marking devices are commonly used to apply, by printing or labeling, various identification codes to products during their manufacture, such as batch numbers, expiration dates, barcodes etc. Product marking is usually performed at the end of packaging process, wherein markings are applied to each manufactured, fully functional product. Therefore, proper maintenance of marking devices plays an essential role in the production process, as an interruption in operation of the marking device may stop the whole production line. For example, a production line for chocolate biscuits may span over several hundred meters, wherein the biscuits undergo various processes, such as heating, cooling, coating etc, at the end of which they are packaged and the packages are marked by a marking device, such as an ink jet printer, applying production date, production batch numbers, product expiry date etc. In case of failure of the marking device, the whole production line is stopped, which after prolonged break requires not only discarding all the products that have not been packaged yet. Moreover, in case of other food products, such as yoghurts, a longer break in operation of a production line may require disinfection of all the components, which is a time-consuming operation. Typical maintenance methods include systematic service of devices, timely exchange of components, but they prevent only failures related to typical wear and tear and do not prevent failures related to unexpected change of environmental situation or malfunctioning of components that have not yet reached their end of service time.

A US patent application No. US2004/0234278 describes a system for managing office printers, comprising a management apparatus which receives use information, such as a number of print-outs, sent from a plurality of printers, discriminates whether preventive maintenance for the printing machine is needed or not and transmits instruction information to a terminal used by maintenance personnel. The management apparatus may communicate with the printers via a computer network. The use information is transmitted every time the printing machine performs the printing operation, and includes e.g. number of printouts being made during the operation, single/double side information, mono/colour print information. Therefore, such system allows only detecting excessive use of the machine after a printing operation. Such system can be useful for management of typical office printers, but does not offer satisfactory functionality with respect to marking devices used on production lines, as it allows only to determine the time of service related to typical wear and tear of components.

A US patent US6310692 presents a system for monitoring information available in standard office printers. The system extracts printer resource information from each printer, which may include printer resource level or deficient physical properties reported by the printers. Therefore, the system can detect only faults related to low resources or faults reported by the printer itself. The system does not monitor values of printer working parameters. The system is a reactive, not a preventive system.

A US patent application US2004/073720 presents a system for monitoring information available in standard office printers. It collects a status information of the printers, such as low toner, low or empty paper trays, low ink, paper jam, printer door open, non-responsive printer. Therefore, the system can detect only faults reported by the printer itself. The system does not monitor values of printer working parameters. The system is a reactive, not a preventive system.

A US patent application US2005/002054 presents a method for prediction of abnormal state occurrence. It involves a monitoring center for receiving information from image forming apparatus via a network. The information to be received includes sensing information and control parameter information. An index value D is calculated on the basis of the various pieces of information. Although the index value D indicates that a failure will probably occur, it does not indicate the source of the problem, does not contain means for generating alert information and thus does not allow real-time prevention of failures in a centralized system to prevent failures for a multitude of devices.

The aim of the present invention is to provide a system and method for preventive maintenance of marking devices, allowing continuous, real-time prevention of a wide range of failures with a limited amount of service personnel interaction.

The object of the invention is a system for preventive maintenance of a plurality of marking devices installed in a production line and configured to apply identification code to products manufactured on the production line, the system comprising monitoring means configured to monitor working parameters of the plurality of marking devices, the working parameters representing physical quantities related to operation of device components and alerting means configured to generate alerting information about devices for which the monitored working parameters are detected outside a predetermined allowable range specifying allowable minimum and/or allowable maximum value for the particular parameter.

The monitoring means may comprise a data collector configured to inquire the marking devices about their working parameters in predetermined time intervals.

The alerting means may comprise an alert generator configured to analyze the monitored working parameters individually by comparing each monitored parameter value with the predetermined allowable range and to generate alerts upon detecting a working parameter value outside a predetermined allowable range, a devices database configured to store configuration data of marking devices, and an alert responser configured to generate alert responses of a type based on received alerts, values of parameters and device configuration data.

The system may further comprise a plurality of concentrators, each communicatively connected with a plurality of marking devices, each concentrator comprising a data collector and an alert generator, a central management system communicatively connected with the concentrators and comprising an alert manager configured to receive alerts from the concentrators, the devices database configured to store configuration data of marking devices connected with the concentrators and the alert responser configured to generate alert responses for the marking devices connected with the concentrators of a type based on alerts received from the alert generators, values of parameters and device configuration data stored in the devices database.

At least one concentrator may further comprise a local database configured to store the working parameters collected from the marking devices.

At least one concentrator may further comprise a communications manager configured to block transmission of predetermined data from the concentrator to the central management system.

The data collector can be configured to operate according to predetermined tasks, wherein each task defines an identifier of a marking device, at least one working parameter to be inquired and an inquiry frequency.

The system may further comprise an operator console configured to present alerts and device configuration data to an operator and to allow manual alert response generation.

The marking devices may comprise a localizing module and the operator console can be configured to present topography of a production line with each marking device shown in a position indicated by the localizing module.

The system may further comprise a plurality of service personnel consoles, each associated with one or more marking devices, and wherein the alert responser is further configured to transmit the alert response to service personnel consoles.

The system may further comprise a response manager configured to receive alert responses from the alert responser and to transmit the alert response to the marking device identified by the alert response.

The object of the invention is also a method for preventive maintenance of a plurality of marking devices installed in a production line and configured to apply identification code to products manufactured on the production line, the method comprising the steps of monitoring working parameters of the plurality of marking devices, the working parameters representing physical quantities related to operation of device components and generating alerting information about devices for which the monitored working parameters are detected outside a predetermined allowable range specifying allowable minimum and/or allowable maximum value for the particular parameter.

The working parameters can be monitored by inquiring the marking devices about the working parameters in predetermined time intervals.

The alerting information can be generated by analyzing the working parameters individually by comparing each parameter value with the predetermined allowable range, generating alerts upon detecting a working parameter value outside a predetermined allowable range, and generating alert responses of a type based on alerts, values of parameters and predefined configuration data of marking devices.

The method may further comprise the steps of communicatively connecting groups of marking devices to concentrators and communicatively connecting concentrators to a central management system, collecting working parameters of marking devices and generating alerts within the concentrators, storing configuration data of marking devices connected with the concentrators in a devices database receiving alerts and generating alert responses within the central management system, wherein the response type is based on received alerts, values of parameters and device configuration data stored in the devices database.

The working parameters collected from the marking devices can be stored in a local database of the concentrator.

The method may further comprise the step of blocking transmission of predetermined data from the concentrator to the central management system.

The method may be configured to operate according to predetermined tasks, wherein each task defines an identifier of a marking device, at least one working parameter to be inquired and an inquiry frequency.

The method may further comprise the step of presenting alerts and device configuration data to an operator and allowing manual alert response generation.

The method may further comprise the step of presenting a topography of a production line with each marking device shown in a position indicated by the localizing module of the marking device.

The alert responses can be transmitted to service personnel consoles, each associated with one or more marking devices.

The alert responses can be received from the alert responser and transmitted to the marking device identified by the alert response.

The invention is shown by means of exemplary embodiments on a drawing, in which:

Fig. 1 shows a general diagram of a production line with marking devices.
Fig. 2 shows a structure of one embodiment of the system according to the invention;

Fig. 3 shows a structure of another embodiment of the system according to the invention;
Fig. 4 shows an operator console of a central management system.
Fig. 5 shows an exemplary graph of a TOF parameter for an inkjet printer.

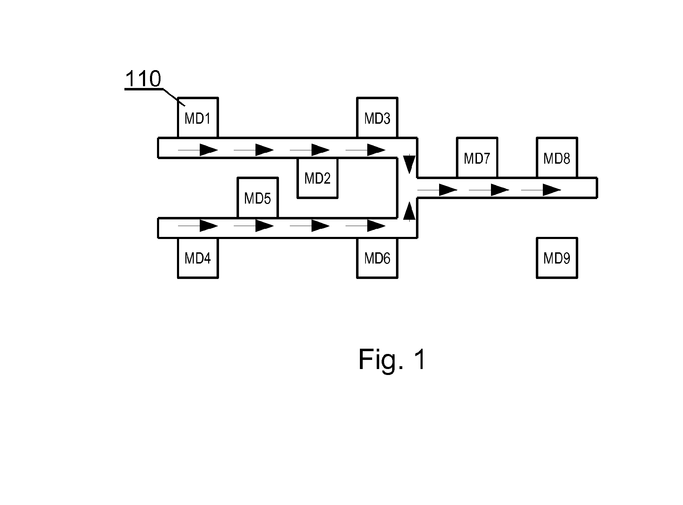

Fig. 1 shows a general diagram of a production line with marking devices 110 for applying identification codes to products. The production line may comprise a plurality of sections along which various marking devices MD1-MD7 are installed to apply identification codes to intermediate products, as well as a marking device MD8 to apply identification codes to final products and one or more backup marking devices MD9 to be used as a replacement for one of the devices MD1-MD8 in case of failure. The total reliability of the marking system decreases with the number of marking devices installed. Therefore, even if reliable marking devices are installed, e.g. devices having a 99% up-time coefficient, the up-time coefficient for the production line having 10 such devices decreases to only 90%. Therefore, for sophisticated production lines, preventive maintenance is crucial and allows saving substantial losses due to unexpected device failures.

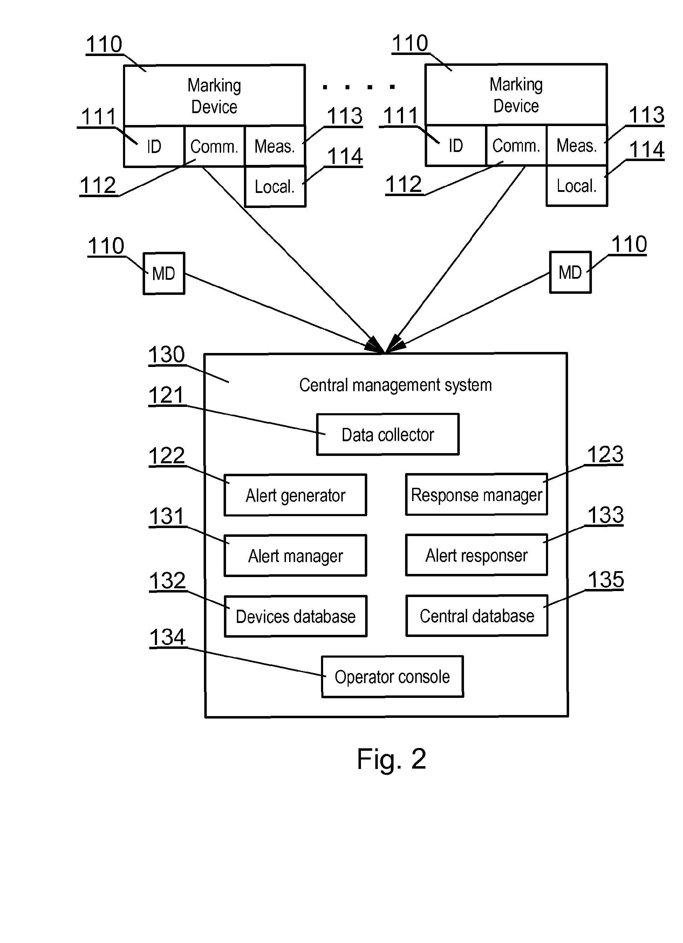

Fig. 2 shows a structure of one embodiment of the system according to the invention. The system can be used for preventive maintenance of a multitude of marking devices 110 installed in many locations, such as distinct production facilities. All marking devices are communicatively connected to a central management system 130.

Each marking device 110 is communicable via a bidirectional communication port 112, preferably a standardized network communication port. In case a device does not have networking communication functionality, for example it is communicable only via a proprietary communication port, a network adapter may be connected to the device to serve as the communication port 112. Each marking device 110 has a device identifier 111, which can include a device serial number and preferably a number of other identifiers, such as a network address, for example an IP address.

Furthermore, some or all of the marking devices 110 may be coupled with an external measurement apparatus 113, such as an oscilloscope for measuring parameters of signals within the device, a thermometer for monitoring temperature of specific components of the device or environment, a camera for monitoring the markings applied by the device and/or other applicable accessories.

In addition, each marking device may comprise a localizing module 114 for indicating the position of the device 110 within the production line. The localizing module 114 may be e.g. an RFID tag communicating with RFID transceivers located at distinct points of the production line for calculating the exact position of the device using triangulation algorithms. This allows to generate a plot such as shown in Fig. 1, visualizing the production line and all devices operating within the line at their exact locations. Without the localizing module, the location of a given printer can be entered to the system data at the setup of the production line, but the printer location may change during the its lifetime, for example the production line can be rearranged or the printer can be replaced by another printer. Then, if any faults are detected by the operator in the central system, e.g. via an operator console 134, the operator can contact service personnel directly and clearly indicate the faulty device, e.g. by indicating "the device at the end of the first line".

The system according to the invention can be used for preventive maintenance of different types of marking devices 110, i.e. printing or labeling devices, such as continuous ink jet printers, drop on demand ink jet printers, laser coders, thermal transfer printers, RFID tag programming devices, automatic labeling heads, provided that the device allows access to information on its working parameters. The term "working parameters" is to be understood as parameters that represent physical quantities related to operation of various electrical, mechanical and hydraulic components of the devices, such as their speed, temperature, phase, pressure etc. The term "working parameters" does not encompass the scope of the term "printer resources", which describes the quantity of supplies available in the printer, such as paper, toner or ink level, which are commonly monitored in standard office printer management systems. The term "working parameters" also does not encompass the scope of the term "printer status", which relates to the logical value of the status reported by the printer and describes possible faults detected by the printer itself, such as a paper jam, lack of supplies or open printer cover, which is commonly monitored in standard office printer management systems.

By analyzing the working parameters, a wide range of failures can be detected, such as failures related to unstable power supply, faulty electronic modules, blockages in the hydraulic or pneumatic system, wear and tear of mechanic parts. The particular working parameters that are measured allow to determine the condition of the components of the system and detect any deviations from a normal condition in a time that usually allows sufficient time for taking action before the device becomes unoperational.

The device may provide the current value of its working parameters in response to a request sent via a communication protocol specific to the device. Moreover, some working parameters can be output automatically, without previous request. The set of accessible working parameters can vary between devices, i.e. some devices may allow access to more working parameters than other devices. Moreover, different types of devices have different types of working parameters.

For example, a typical set of working parameters provided by an ink jet printer may include:

- TOF (Time of Flight) - defining the time of flight of a single ink jet droplet.

Values of TOF outside a specific range may indicate inadequate ink viscosity or may be caused for example by the vibrations of the parent machine or poor drop break-up caused by incorrect modulation or ink viscosity.

- Modulation - defining the spacing between the drops of ink from the nozzle. Values of modulation outside a specific range may indicate for example inadequate ink density or may be caused by the addition of different types of inks or chemicals to the ink.
- Phase - defining the method of control of the synchronization between the drop ink charge and the jet break-up time. Values of phase outside a specific range may be caused for example by lack of jet, poor jet break-up, jet misalignment, faulty phase amplifier on IPM PCB.
- Pressure - defining pressure required to achieve the correct TOF Values. Values of pressure outside a specific range may indicate inadequate ink density or may be caused for example by the nozzle blockage or ink dip tube blockage. For example, if the pressure is more than 200 normalized units, the printer may stop printing.
- Head Temperature - defining local printhead temperature. Values of temperature outside a specific range may indicate that environment temperature is too high. This may contribute to increased consumption of solvent. For example, if a local printhead temperature exceeds 60°C, the printer can be immediately shut down in a controlled way.

A typical set of working parameters provided by a thermal transfer printer may include:

- Darkness - defining the darkness of the print. Values of darkness level above a threshold may indicate premature printhead wear or print quality problems.
- Printhead Temperature - defining the temperature of the printhead.
  Values of temperature outside a specific range may indicate overheating of the printhead.

A typical set of working parameters provided by a laser coder may include:

- Laser Power - defining the power of the laser beam. Values of laser power level above a threshold may indicate that the laser tube needs to be refurbished.
- Laser Temperature - indicating temperature of the laser gun, which may be caused by a faulty operation of a cooling system or a dust filter.

A typical set of working parameters provided by a label applicator may include:

- Current Level - defining the current level of the motor. In case the level is increased above a reference level it may indicate a blockage of drive rolls or inappropriate label roll unwinding process.
- Speed (labels/min) - defining the amount of labels applied per minute.
  Incorrect values may indicate possible over speed resulting in missing labels.
- Speed (m/min) - defining the linear speed in meters per minute. Incorrect values may indicate too high or too slow linear speed, resulting in incorrect position of the label on the product.
- Driver Temperature - defining the current motor driver temperature.
  Incorrect values may indicate label applicator overload or overheating due to a problem of a cooling system or a dust filter.

The central management system 130 comprises monitoring means configured to monitor working parameters of the plurality of marking devices, preferably a data collector 121, configured to inquire the marking devices 110 or associated measurement apparatus 113 about working parameters in predetermined time intervals. The data collector 121 may operate according to a predefined set of tasks, wherein each task may define a device identifier, one or more working parameters and an inquiry frequency. A plurality of tasks may be defined for each device, having different inquiry frequencies, for example some parameters may be inquired more frequently than the others. For example, some of the parameters may be inquired once per second, other parameters may be inquired once per minute and other parameters may be inquired once per hour. It is to be understood that inquiring about working parameter in a random time, but not longer than in a certain period of time is to be understood as an equivalent to an inquiry in a predetermined time interval. The tasks of the data collector 121 may be defined via the operator console 134. An exemplary set of tasks of the data collector 121 may comprise:

| Device_ID | Parameters | Frequency |
|-----------|------------|-----------|
| Dev_1 | TOF, Modulation, Phase | 1 per second |

(continued)

| Device_ID | Parameters | Frequency |
|---|---|---|
| Dev_1 | Darkness | 1 per hour |
| Dev_2 | Darkness, Printhead temp. | 1 per minute |

The working parameters monitored by the monitoring means, such as the parameters collected by the data collector 121, are analyzed by alerting means configured to generate alerting information about devices for which the monitored working parameters are detected outside a predetermined allowable range specifying allowable minimum and/or allowable maximum value for the particular parameter. The alerting means may comprise an alert generator 122, which is configured to analyze the monitored working parameters individually by comparing each monitored parameter value with the predetermined allowable range and to generate alerts upon detecting a working parameter value outside a predetermined allowable range. The allowable range for each parameter can be defined individually for each device, as each device may have different properties (for example, different wear and tear) or may operate at different conditions (for example, more or less noisy environment) or may be used for different applications (for example, different type of products to be marked). The allowable range specifies the allowable minimum and/or maximum value for a given parameter. An exemplary set of allowable values may comprise:

| Device_ID | Parameter | Min | Max |
|---|---|---|---|
| Dev_1 | TOF | 700 | 800 |
| Dev_2 | TOF | 750 | 850 |
| Dev_1 | Head Temperature | 0 | 60 |
| Dev_2 | Head Temperature | 0 | 65 |

In addition, generation of an alert may be based on comparison of a plurality of parameters or their relationships, which enables elaborate analysis of working parameters of the device. Furthermore, the sequence in which the alerts are generated can be analyzed, in order to detect specific failures indicated by specific sequences of alerts.

Therefore, an alert will be generated in case the TOF parameter for device Dev_1 is below 700 or above 800. Similarly, an alert will be generated in case the Head Temperature for device Dev_1 exceeds 60 degrees.

An alert may have a form of a message, comprising the identifier of the marking device and an alert description. The alert description may comprise the working parameter identification and its value which exceeded the allowable range. The alerts may be generated repeatedly for each new working parameter value collected, therefore the frequency of alert generation may be equal to the frequency of parameter inquiries. Alternatively, an alert may be generated only once when the first irregularity has been detected. Furthermore, an alert may be delayed until a number of irregularities have been detected, in order to filter-out incidental irregularities. Therefore, an exemplary alert may have a form of:

$$\{Dev\_1; TOF; 900\}.$$

An alert manager 131 is configured to receive alerts from the alert generator 122. The alerts may be stored at a central database 135 for keeping a history of operation of devices of the system and for using the history to improve future preventive actions. Moreover, the central database 135 may store a history of selected sub-set of working parameters for some or all of devices, in order to facilitate examination of certain kinds of alerts.

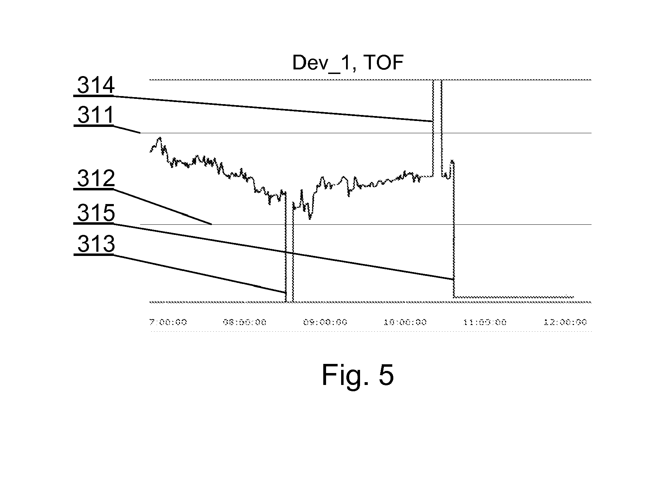

The working parameters stored in the history may be presented to the system operator in form of plots, allowing easier spotting of source of problems with the device. An exemplary graph of a TOF parameter for an inkjet printer is shown in Fig. 5. The TOF parameter has exceeded the allowable ranges 311, 312 at about 8:30 (313) and at about 10:20 (314). At 10:45 the printer became unoperational (315). In the example shown, there was no preventive action undertaken (for example, the service personnel could not reach the production facility on time or the alert message was not received due to error in communication). However, a fully operational system according to the invention would generate an alert at 8:30, which would allow more than 2 hours for taking a service action for the printer.

A devices database 132 is configured to store configuration data of marking devices 110. Each marking device, identifiable by its unique identifier, may be characterized by a plurality of parameters, such as a device type, a model name, a serial number, type of components installed (such as a type of printing head), operating conditions (humidity, temperature, workload), device photo (to help identifying the printer on a production line) etc.

An alert responser 133 is configured to generate alert responses based on received alerts and device configuration data. The alert responser may operate according to predefined rules, for example:

| Device_ID | Parameter | Value | Response |
|-----------|-----------|----------|-------------------------------|
| Dev_1 | TOF | 800-1000 | Adapt another parameter |
| Dev_1 | TOF | >1000 | Send service personnel message |
| Dev_1 | TOF | >2000 | Stop the device |

In addition, a response may be based on comparison of a plurality of parameters or their relationships, which enables generation of efficient responses.

A response of the type "adapt another parameter" involves a command to be sent to a device via a response manager 223. The response manager 123 is configured to translate the command included in the response to a device-specific protocol (if necessary, i.e. if the command has a format other than the format handled by the device), and to transmit the command to the marking device 110 identified by the alert response. The command may involve for example increasing the amount of solvent used by an ink jet printer, adapting an operating temperature of some components, adapting a voltage, etc.

A response of the type "send service personnel message" involves a message to be sent to a service personnel console 140 associated with a given device, in order for a direct intervention to be taken.

A response may be delayed with respect to a value set for an alert. For example, an alert may be configured to be generated when the ink pressure exceeds 5% of the reference value (of 180 for instance), while a response may be generated only when this value exceeds 10% of the reference value detected without a maintenance action being taken on time. Similar escalation procedure might be applied in case of low solvent level for instance. An alert may be configured to be generated in case the solvent is not added by the operator within more than an hour from the first warning signal on the marking device, while a response may be generated when after two hours from the first warning signal on the printer solvent level is still too low.

The alert responser rules may be more elaborate than the ones presented in the table. For example, the rules may involve comparison of more than one parameter, comparison of the parameters with device configuration, comparison of the current parameter value with its historical values etc.

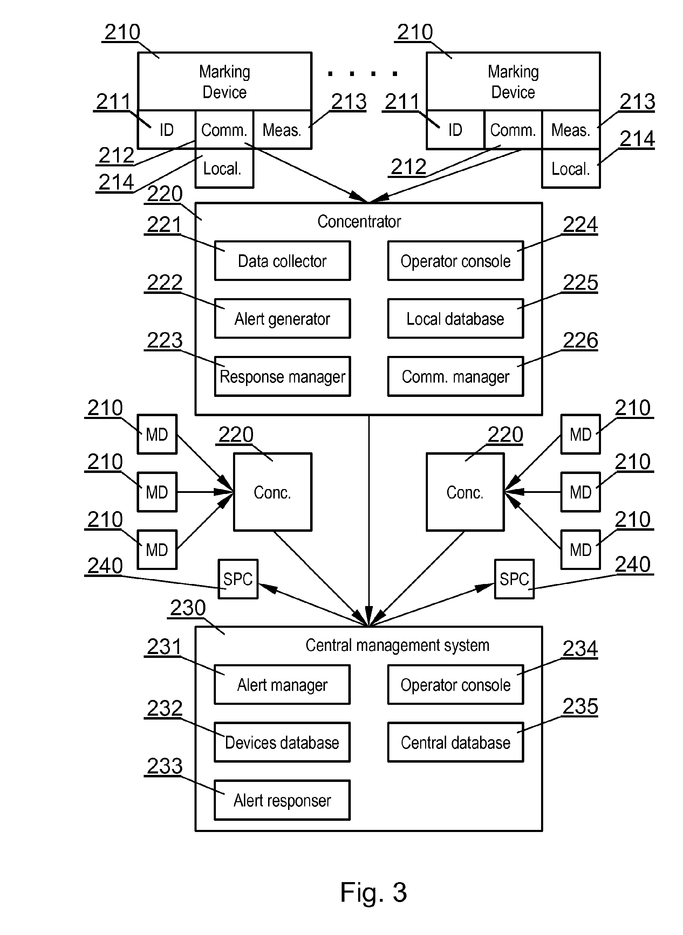

Fig. 3 shows a structure of another embodiment of the system according to the invention. The system can be used for preventive maintenance of a multitude of marking devices 210 installed in many locations, such as distinct production facilities. The marking devices 210 at each location are connected to a concentrator 220. The concentrators of 220 all locations are connected to a central management system 230.

The configuration of marking devices 210 is similar to that of marking devices 110 shown in Fig. 2. Each marking device 210 is communicable via a bidirectional communication port 212, preferably a standardized network communication port. In case a device does not have networking communication functionality, for example it is communicable only via a proprietary communication port, a network adapter may be connected to the device to serve as the communication port 212. Each marking device 210 has a device identifier 211, which can include a device serial number and preferably a number of other identifiers, such as a network address, for example an IP address.

Furthermore, some or all of the marking devices 210 may be coupled with an external measurement apparatus 213, such as an oscilloscope for measuring parameters of signals within the device, a thermometer for monitoring temperature of specific components of the device or environment, a camera for monitoring the markings applied by the device and/or other applicable accessories.

Each concentrator 220 comprises a data collector 221, configured to inquire the marking devices 210 or associated measurement apparatus 213 about working parameters in predetermined time intervals, in a way similar to the data collector 121 shown in Fig. 2. The tasks of the data collector may be defined directly by an operator of the concentrator 220 via a local operator console 224 or remotely by a central management system 230.

The working parameters collected by the data collector 221 may be stored in a local database 225. The local database 225 may store all or selected parameters. The number of records per parameter or the period for which the parameters are to be stored can be defined for each parameter separately. This guarantees that the history of parameters stored is available for future analysis, in order to analyze the history of operation of the device.

The working parameters collected by the data collector 221 or stored in the local database 225 are analyzed by an alert generator 222, which is configured to generate alerts upon detecting a working parameter value outside a predetermined allowable range, in a way similar to the alert generator 122 of Fig. 2.

The concentrator 220 comprises a communications manager 226 used to manage communication with the central management system 230, including transmission of the alerts and working parameters, reception of responses and filtering of transmitted data. The operator of the concentrator 220 may block transmission of predetermined data, such as some of the working parameters or some of alerts, in order to keep confidentiality of information. However, the confidential parameters may be still kept stored in the local database, in order to allow their analysis by local personnel.

All concentrators 220 are connected to the central management system 230 via a network, for example the Internet. The central management system is used to collect alerts and working parameters data from all concentrators, analyze them and generate responses.

The central management system 230 comprises an alert manager 231 configured to receive alerts from the concentrators 220. The alerts may be stored at a central database 235 for keeping a history of operation of devices of the system and for using the history to improve future preventive actions. Moreover, the central database 235 may store a history of selected sub-set of working parameters for some or all of devices, in order to facilitate examination of certain kinds of alerts.

A devices database 232 is configured to store configuration data of marking devices 210. Each marking device, identifiable by its unique identifier, may be characterized by a plurality of parameters, such as a device type, a model name, a serial number, type of components installed (such as a type of printing head), operating conditions (humidity, temperature, workload) etc.

An alert responser 233 is configured to generate alert responses based on received alerts and device configuration data, similarly to the alert responser 133 of Fig. 2. The alert responses can be sent to a concentrator to which a given device is connected, where it is received by a response manager 223. The response manager 223 is configured to translate the command included in the response to a device-specific protocol (if necessary, i.e. if the command has a format other than the format handled by the device), and to transmit the command to the marking device 210 identified by the alert response, similarly to the response manager 123 of Fig. 2.

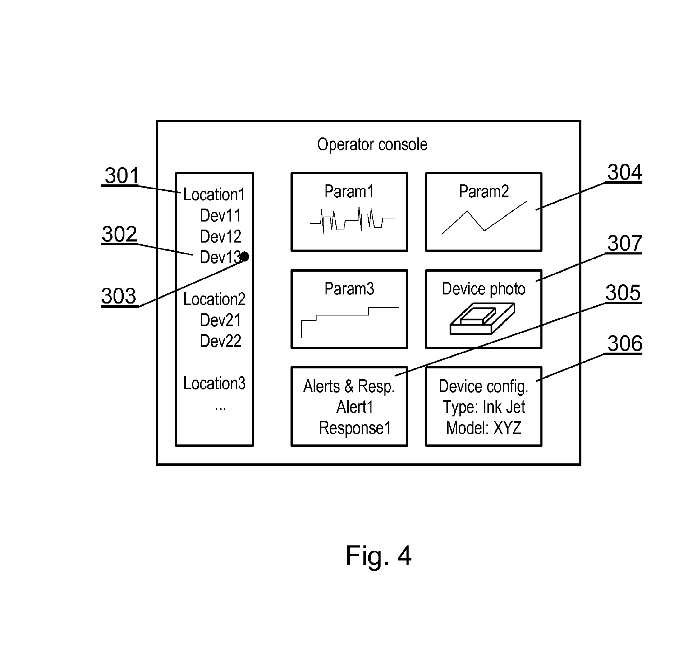

The system may be configured and used via an operator console 134, 234 of the central management system 130, 230, configured to present to the operator the current status of devices, alerts, device photo and working parameters. The operator console 134, 234 may comprise a screen displaying data arranged for example as shown in Fig. 4. In case of the embodiment of Fig. 3, for each concentrator 301, usually defining a single location, a list of devices 302 attached to it can be presented. In case an alert has been generated for a device, it can be indicated by a flag 303. For a selected device, a history of its operating parameters can be presented in a plurality of windows 304. Moreover, the current and previous alerts and responses may be presented in another window 305. In order to help the operator identify the device, device configuration data may be shown in window 306 and device photo in window 307.

By centralizing all data collected and generated within the system in a central operator console 134, an efficient service center can be created. The operator console 134 can be monitored by an experienced serviceman, who can use his knowledge to manage operation of a multitude of production lines at different geographical locations. The data available at the console allow the service personnel to analyze a generated alert, even if the alert is non-standard and requires taking non-standard action, and to contact the crew at the production line at which the alerted device is located to provide precise instructions on repair or replacement of the device.

The individual elements of the system can be implemented as individual devices handling their dedicated functionality or as software modules run on one or more computers.

The system according to the invention offers highly efficient preventive maintenance of a multitude of marking devices which can be installed in many locations, for example in many different production facilities. Collecting working parameters of marking devices in regular time intervals allows efficient preventive maintenance, as the change of one or more parameters may indicate an upcoming device failure, which can be timely prevented. Moreover, the working parameters of devices, such as TOF, modulation or voltage levels, in contrast to parameters describing printer resources or printer status, such as the number of pages printed, allow precise identification of many upcoming faults of the device. By using local concentrators, the amount of data transmitted to the central management system is reduced, as the concentrators can filter typical working parameters and issue alerts only when a working parameter exceeds an allowable range. This facilitates inquiring the marking devices about their working parameters with high frequency, thereby resulting in quick detection of deviating values of parameters, which may suggest upcoming failures. Moreover, some sensitive data does not have to be provided to the central management system, therefore the confidentiality of printing process at individual production lines is kept. Therefore, the system can be used to manage production lines of various manufacturers, even directly competing with each other. In case of typical alerts, an automatic alert responser at the central management system may generate proper responses to be passed to the marking devices or service personnel consoles to remedy the situation. Furthermore, by collecting alerts from many different devices operating in different production lines, i.e. in different environments, a large database of knowledge can be created, wherein data related to faults in one location may be used in future to prevent failures in other locations. Therefore, it is advantageous if the system comprises a large number of marking devices, which allows collecting substantial amounts of working parameters data and creating a large database related to operation of marking devices.

In contrast to the reactive systems for managing office printers known from the prior art, the system according to the invention is preventive, i.e. it allows taking action before the device becomes faulty and unoperational. By informing about fault possibility before the fault occurs, the total up-time and availability for the production line can be greatly increased. Even if the alerts generated within the system indicate a serious problem requiring replacement of a marking device, the indication is usually generated early enough for the service personnel to prepare a replacement device and the schedule the most optimal time and conditions for replacement. The system can be used as an effective tool to support the Total Productive Maintenance (TPM) processes by monitoring of the Overall Equipment Effectiveness (OEE) and visualizing the six large production losses. The data collected within the system facilitates generating Event Tree Analysis (ETA) and Fault Tree Analysis (FTA).

**Claims**

1. A system for preventive maintenance of a plurality of marking devices (110, 210) installed in a production line and configured to apply identification code to products manufactured on the production line, the system comprising:

   - monitoring means configured to monitor working parameters of the plurality of marking devices (110, 210), the working parameters representing physical quantities related to operation of device components,
   - alerting means configured to generate alerting information about devices for which the monitored working parameters are detected outside a predetermined allowable range specifying allowable minimum and/or allowable maximum value for the particular parameter.

2. The system according to claim 1, wherein the monitoring means comprise a data collector (121, 221) configured to inquire the marking devices (110, 210) about their working parameters in predetermined time intervals.

3. The system according to claims 1 or 2, wherein the alerting means comprise:

   - an alert generator (122, 222) configured to analyze the monitored working parameters individually by comparing each monitored parameter value with the predetermined allowable range and to generate alerts upon detecting a working parameter value outside a predetermined allowable range,
   - a devices database (132, 232) configured to store configuration data of marking devices (110, 210), and
   - an alert responder (133, 233) configured to generate alert responses of a type based on received alerts, values of parameters and device configuration data.

4. The system according to any of previous claims, further comprising

   - a plurality of concentrators (220), each communicatively connected with a plurality of marking devices (210), each concentrator comprising a data collector (221) and an alert generator (222),
   - a central management system (230) communicatively connected with the concentrators (220) and comprising

     o an alert manager (231) configured to receive alerts from the concentrators (220),
     o the devices database (232) configured to store configuration data of marking devices (210) connected with the concentrators (220) and
     o the alert responder (233) configured to generate alert responses for the marking devices (210) connected with the concentrators (220) of a type based on alerts received from the alert generators (222), values of parameters and device configuration data stored in the devices database (232).

5. The system according to claim 4, wherein at least one concentrator (220) further comprises a local database (225) configured to store the working parameters collected from the marking devices (210).

6. The system according to any of claims 4-5, wherein at least one concentrator (220) further comprises a communications manager (226) configured to block transmission of predetermined data from the concentrator (220) to the central management system (230).

7. The system according to any of previous claims, wherein the data collector (121, 221) is configured to operate according to predetermined tasks, wherein each task defines an identifier of a marking device (110, 210), at least one working parameter to be inquired and an inquiry frequency.

8. The system according to any of previous claims, further comprising an operator console (134, 234) configured to present alerts and device configuration data to an operator and to allow manual alert response generation.

9. The system according to claim 8, wherein the marking devices (110, 210) comprise a localizing module (114, 214) and the operator console (134, 234) is configured to present topography of a production line with each marking device (110, 210) shown in a position indicated by the localizing module (114, 214).

10. The system according to any of previous claims, wherein the system further comprises a plurality of service personnel consoles (140, 240), each associated with one or more marking devices (110, 210), and wherein the alert responser (133, 233) is further configured to transmit the alert response to service personnel consoles (140, 240).

11. The system according to any of previous claims, further comprising a response manager (123, 223) configured to receive alert responses from the alert responser (133, 233) and to transmit the alert response to the marking device (110, 210) identified by the alert response.

12. A method for preventive maintenance of a plurality of marking devices (110, 210) installed in a production line and configured to apply identification code to products manufactured on the production line, the method comprising the steps of:

   - monitoring working parameters of the plurality of marking devices (110, 210), the working parameters representing physical quantities related to operation of device components,
   - generating alerting information about devices for which the monitored working parameters are detected outside a predetermined allowable range specifying allowable minimum and/or allowable maximum value for the particular parameter.

13. The method according to claim 12, wherein the working parameters are monitored by inquiring the marking devices about the working parameters in predetermined time intervals.

14. The method according to any of claims 12-13, wherein the alerting information is generated by:

   - analyzing the working parameters individually by comparing each parameter value with the predetermined allowable range
   - generating alerts upon detecting a working parameter value outside a predetermined allowable range, and
   - generating alert responses of a type based on alerts, values of parameters and predefined configuration data of marking devices (110, 210).

15. The method according to any of claims 12-14, further comprising the steps of

   - communicatively connecting groups of marking devices (210) to concentrators (220) and communicatively connecting concentrators (220) to a central management system (230),
   - collecting working parameters of marking devices (210) and generating alerts within the concentrators (220),
   - storing configuration data of marking devices (210) connected with the concentrators (220) in a devices database (232)receiving alerts and generating alert responses within the central management system (230), wherein the response type is based on received alerts, values of parameters and device configuration data stored in the devices database (232).

Fig. 1

Fig. 2

Fig. 3

Fig. 4

Fig. 5

EP 2 393 054 A1

Europäisches
Patentamt
European
Patent Office
Office européen
des brevets

EUROPEAN SEARCH REPORT

Application Number

EP 11 16 8351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 239 434 A2 (AIR LIQUIDE [FR]) 11 September 2002 (2002-09-11) * the whole document * | 1-15 | INV. G06Q10/00 G05B19/418 G08B25/00 |
| X | EP 0 822 473 A2 (CANON KK [JP]) 4 February 1998 (1998-02-04) * abstract; figures 1-4 * * column 1, line 32 - column 2, line 15 * * column 3, line 4 - line 52 * * column 4, line 3 - column 7, line 18 * | 1-15 | |
| X | US 2010/033318 A1 (TAMPKE MICHAEL S [US]) 11 February 2010 (2010-02-11) * abstract; figures 1,2A,2B,3,4 * * paragraph [0008] - paragraph [0010] * | 1-15 | |
| X | EP 2 169 496 A1 (ROCKWELL AUTOMATION TECH INC [US]) 31 March 2010 (2010-03-31) * the whole document * | 1-15 | |

TECHNICAL FIELDS
SEARCHED (IPC)

G05B
G08B
G06Q

The present search report has been drawn up for all claims

| Place of search | Date of completion of the search | Examiner |
|---|---|---|
| The Hague | 22 September 2011 | Tiago Pinheiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**ANNEX TO THE EUROPEAN SEARCH REPORT
ON EUROPEAN PATENT APPLICATION NO.**                    EP 11 16 8351

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2011

| Patent document cited in search report | | Publication date | Patent family member(s) | | Publication date |
|---|---|---|---|---|---|
| EP 1239434 | A2 | 11-09-2002 | AU<br>CA<br>JP<br>NZ<br>US | 1869202 A<br>2374303 A1<br>2002366223 A<br>517394 A<br>6646564 B1 | 12-09-2002<br>07-09-2002<br>20-12-2002<br>31-10-2003<br>11-11-2003 |
| EP 0822473 | A2 | 04-02-1998 | TW<br>TW<br>US | I249760 B<br>I246708 B<br>6385497 B1 | 21-02-2006<br>01-01-2006<br>07-05-2002 |
| US 2010033318 | A1 | 11-02-2010 | NONE | | |
| EP 2169496 | A1 | 31-03-2010 | US | 2010082273 A1 | 01-04-2010 |

EPO FORM P0459

For more details about this annex : see Official Journal of the European Patent Office, No. 12/82

**REFERENCES CITED IN THE DESCRIPTION**

**Patent documents cited in the description**

- US 20040234278 A
- US 6310692 B
- US 2004073720 A
- US 2005002054 A